# DEMANDE DE BREVET EUROPEEN

(11) **EP 4 346 131 A1**
(43) Date de publication de la demande: **03.04.2024**
(21) Numéro de dépôt: 23195550.1
(22) Date de dépôt: 05.09.2023
(51) Int. Cl.: H04B 17/30, H04W 24/00, H04W 84/12

(54) **PROCÉDÉ ET DISPOSITIF DE CONTRÔLE D'UN RÉSEAU LOCAL**

(30) Priorité: 30.09.2022 FR 2209977
(71) Demandeur: Orange, 92130 Issy-les-Moulineaux (FR)
(72) Inventeur: FONTAINE, Fabrice, 92326 Chatillon (FR); LE GUILLOU, Xavier, 92326 Chatillon (FR)

(57) **Abrégé**

L'invention concerne un procédé et dispositif de contrôle d'un réseau local administré par un point d'accès du réseau (LAN). Le réseau comporte une pluralité de terminaux (OC1...OCS). Le procédé comprend des étapes de :
- obtenir (E11) au moins un paramètre d'état, dit paramètre global, comportant au moins une donnée représentative d'un fonctionnement du réseau ;
- détecter (E12) un dysfonctionnement du réseau en fonction dudit au moins un paramètre global ;
- en cas de dysfonctionnement, déclencher (E14) au moins une action de contre-mesure

## Description

### Technique antérieure

L'invention se rapporte au domaine général des télécommunications. Elle concerne plus particulièrement le contrôle de la stabilité d'un réseau local.

Les technologies radio, notamment Wi-Fi, sont de plus en plus utilisées au sein d'un réseau local, qu'il soit domestique ou d'entreprise. Ces technologies permettent de connecter des smartphones, des caméras, des drones, des capteurs et encore toutes sortes de terminaux regroupés sous l'acronyme IoT « Internet Of Things ». Bien que ces technologies aient de nombreux avantages, elles comportent aussi des faiblesses liées à la nature même du médium de transmission. En effet, le réseau est partagé entre tous les terminaux du point d'accès. Un terminal défaillant peut empêcher le fonctionnement « normal » des autres terminaux par exemple en monopolisant la bande passante, ce qui peut entraîner des coupures intermittentes sur les flux vidéo et audio du réseau local.

On connaît des solutions pour limiter de telles perturbations.

Le Wi-Fi intelligent » par exemple permet de détecter et modifier automatiquement les canaux Wi-Fi dans un environnement perturbant (un immeuble, un bureau, etc.). Une telle technique a pour objectif de partager au mieux le canal radio entre les différents terminaux des différents points d'accès d'un réseau. Par exemple, si un réseau dispose d'une passerelle et d'un répéteur aptes à communiquer sur plusieurs canaux (fréquences) différents, le pilote Wi-Fi intelligent peut positionner la passerelle et le répéteur sur le canal le moins saturé, répartir intelligemment les terminaux entre la passerelle et le répéteur et/ou sur les différentes bandes de fréquence, en fonction de la performance attendue et de l'encombrement des canaux.

Cependant aucune solution n'existe pour gérer des terminaux défaillants, ou perturbateurs, d'un tel réseau.

Il existe donc un besoin pour une solution simple permettant d'éviter une perturbation d'un réseau local à cause de la défaillance d'un terminal.

### Exposé de l'invention

L'invention vise un procédé de contrôle selon la revendication 1.

Avantageusement, le procédé selon l'invention réalise une détection de la perturbation d'un réseau local et la mise en place de contre-mesures.

Par « point d'accès », on entend ici tout élément de routage apte à créer un réseau local, par exemple Wi-Fi : passerelle, terminal mobile positionné en hotspot, routeur, etc. Dans la suite, cet élément est appelé passerelle et désigne le point d'accès d'un réseau local.

Par « terminal » du réseau, on entend un terminal qui s'est connecté au moins une fois à la passerelle du réseau local. Il est donc « connu » de la passerelle, indépendamment de son état courant : il peut être effectivement connecté à la passerelle, ou déconnecté. Il peut aussi être connecté à un répéteur du réseau. Le terminal peut être de tout type, du moment qu'il est apte à communiquer sur le réseau local.

Par « paramètre d'état », on entend une donnée ou un ensemble de données qui comprennent une indication relative à un paramètre de fonctionnement du réseau : bande passante, latence, saturation, gigue, perte de paquets, etc.

Par « dysfonctionnement » on entend une difficulté de communication sur le réseau ; perte de paquets, augmentation de la latence, refus de connexion d'un nouveau terminal, etc.

Par « contre-mesure » on entend une action du procédé de contrôle pour remédier au dysfonctionnement, comme par exemple une déconnexion ou blocage d'un terminal perturbateur, l'émission d'un message pour prévenir l'administrateur du dysfonctionnement, etc.

Selon des modes de réalisation :
- Le paramètre global comprend au moins une donnée représentative d'un fonctionnement du réseau parmi :
   - une qualité de signal ;
   - une latence ;
   - un débit ;
   - une perte de paquet de données ;
   - un taux de recouvrement.

Avantageusement, le paramètre global comprend une ou plusieurs données qui sont facilement accessibles de l'administration du réseau local. Elles peuvent être combinées entre elles. Elles peuvent concerner un ou plusieurs terminaux, un ou plusieurs canaux, etc.
- L'identification d'un dysfonctionnement est précédée d'une comparaison d'une donnée au moins du paramètre global à un seuil.

Avantageusement, un simple seuillage d'un paramètre de fonctionnement peut être effectué : par exemple si la latence mesurée est supérieure à 10 secondes, on peut décider d'un dysfonctionnement global.
- l'identification d'un dysfonctionnement est suivie d'une étape d'identification d'un terminal au moins responsable du dysfonctionnement, dit terminal perturbateur ;
- l'étape de déclencher une action de contre-mesure est dirigée contre ledit au moins un terminal perturbateur ;
- l'étape de déclencher une action de contre-mesure dépend d'un type de dysfonctionnement détecté ;
- l'étape de déclencher une action de contre-mesure dépend d'un type du terminal perturbateur détecté.
- l'étape de déclencher une action de contre-mesure est suivie d'une étape d'obtenir une valeur mise à jour dudit paramètre global ; et en fonction dudit au moins un paramètre global mis à jour, annuler ladite action de contre-mesure.

Avantageusement, la détection d'un dysfonctionnement global permet de rechercher le terminal qui en est responsable afin de prendre une contre-mesure. Cette contre-mesure peut être avantageusement adaptée au type de dysfonctionnement détecté : ainsi par exemple si le dysfonctionnement indique un débit trop élevé sur un canal Wi-Fi, il peut être judicieux de faire basculer le terminal responsable de la perturbation sur un autre canal, afin de lui offrir un débit plus approprié et de cesser de perturber les autres terminaux de ce canal. Si le dysfonctionnement détecté est potentiellement lié à une attaque du terminal, il peut être judicieux de lui changer d'adresse MAC ou de le déconnecter du réseau local. Si le dysfonctionnement détecté est lié à une perte de paquets, il peut être judicieux d'augmenter la puissance du signal.

Cette contre-mesure peut être avantageusement adaptée au type de terminal détecté : si le terminal est un décodeur numérique (STB), il peut être judicieux de le faire basculer sur un canal offrant plus de débit. Si le terminal est un objet peu protégé, il peut être judicieux de changer son adresse pour le mettre à l'abri d'une attaque.

Avantageusement une action de contre-mesure peut être annulée si l'état du réseau s'améliore.

L'étape de contre-mesure contre ledit au moins un terminal perturbateur comprend une action parmi :
- l'émission d'un message de notification ;
- une déconnexion du terminal perturbateur ;
- une réaffectation de canal Wi-Fi pour le terminal perturbateur ;
- une réaffectation de point d'accès pour le terminal perturbateur ;
- une modification d'adresse du terminal perturbateur ;
- une réaffectation de canal Wi-Fi pour au moins un autre terminal que le terminal perturbateur.
- une désactivation d'une fonction Wi-Fi du réseau ;
- une augmentation de la puissance du signal émis par le point d'accès ;
- une augmentation de la bande passante sur au moins un canal ;
- l'activation d'une nouvelle antenne sur la passerelle de service.

Avantageusement, une ou plusieurs contre-mesures peuvent être mises en oeuvre. Les contre-mesures peuvent être utilisées successivement, ou combinées entre elles. Les contre-mesures peuvent être générales (augmenter la bande passante) ou spécifiques à un terminal.

Corrélativement, l'invention vise aussi un dispositif de contrôle selon la revendication 11.

Les caractéristiques et avantages du procédé de contrôle s'appliquent de la même façon au dispositif de contrôle selon l'invention et vice versa.

Corrélativement, l'invention vise aussi une passerelle comprenant un tel dispositif de contrôle.

L'invention vise également un programme d'ordinateur sur un support d'enregistrement, ce programme étant susceptible d'être mis en oeuvre dans un ordinateur ou un dispositif de contrôle conforme à l'invention. Ce programme comporte des instructions adaptées à la mise en oeuvre du procédé correspondant. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisible par un ordinateur, et comportant des instructions de programme d'ordinateur mentionné ci-dessus. Les supports d'information ou d'enregistrement peuvent être n'importe quelle entité ou dispositif capable de stocker les programmes. Par exemple, les supports peuvent comporter un moyen de stockage, tel qu'une ROM, par exemple un CD-ROM ou une ROM de circuit microélectronique, ou encore un moyen d'enregistrement magnétique, par exemple une disquette (floppy disk) ou un disque dur, ou une mémoire flash. D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, chaque support d'informations ou d'enregistrement peut être un circuit intégré dans lequel le programme est incorporé, le circuit étant adapté pour exécuter ou pour être utilisé dans l'exécution d'un procédé conforme à l'invention.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
[Fig. 1] la figure 1 illustre une architecture d'un réseau de communications dans lequel un dispositif de contrôle peut être mis en oeuvre ;
[Fig. 3] la figure 2 est un logigramme représentant des étapes d'un procédé de contrôle, mis en oeuvre selon un mode de réalisation particulier ;

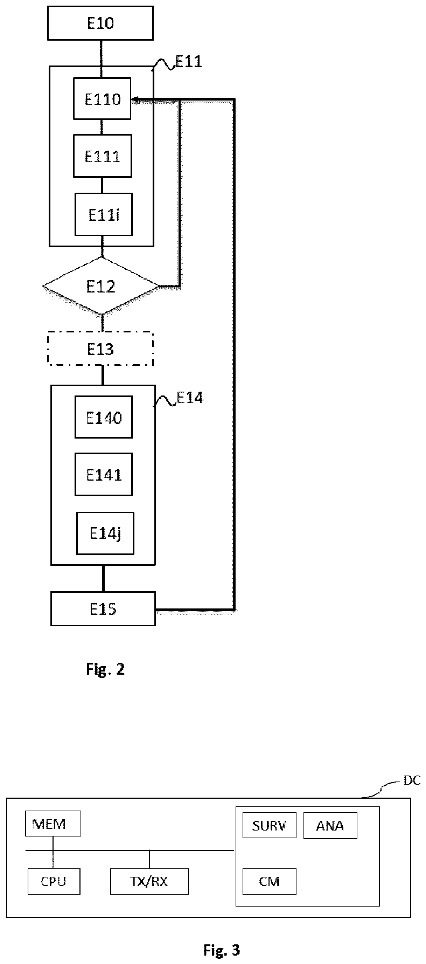

[Fig. 3] la figure 3 illustre une architecture fonctionnelle d'un dispositif de contrôle.

### Description des modes de réalisation

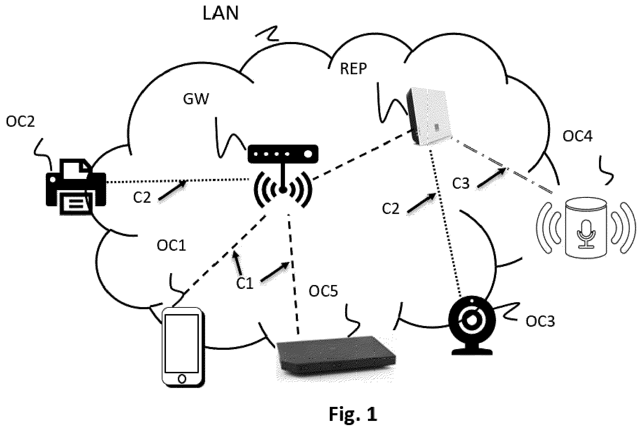

La figure 1 illustre une architecture d'un réseau de communications dans lequel un système de contrôle d'un réseau local tel que proposé peut être mis en oeuvre. Selon cet exemple particulier, le procédé et le dispositif de contrôle se trouvent sur la passerelle de réseau GW.

Le réseau local (LAN) est par exemple un réseau local IP (Internet Protocol), et les paquets de données sont échangés via le protocole TCP/IP. Le réseau (LAN) comporte selon cet exemple un élément de gestion du réseau (GW) appelé dans la suite « point d'accès » ou « passerelle de service » ou plus simplement « passerelle », et des équipements terminaux (OCi) connectés sur ce réseau local aptes à établir des communications entre eux via la passerelle. La passerelle peut également être considérée au sens large comme un terminal du réseau local. Il s'agit par exemple d'une passerelle domestique connue sous la désignation commerciale de « Livebox ». Elle comporte une fonction de communication Wi-Fi, ou point d'accès (en anglais : Access Point), qui lui permet de communiquer avec les terminaux du réseau sans fil. On rappelle que le terme Wi-Fi recouvre un ensemble de normes de la spécification IEEE 802.11 pour des communications sans fil pouvant aller jusqu'à quelques centaines de mètres. Dans le cadre du Wi-Fi, pour se connecter à la passerelle, un terminal doit être appairé en utilisant un mécanisme d'appairage bien connu de l'homme du métier.

Les communications Wi-Fi peuvent utiliser des fréquences dans des bandes différentes : 2.4, 5 GHz ou 6 GHz. Chaque bande de fréquence peut elle-même être découpée en canaux. Dans la bande 2.4 GHz par exemple, il existe 14 canaux possibles. Chaque canal comporte une fréquence centrale autour de laquelle le signal utile est modulé dans une plage de fréquences de 20 à 22 MHz. Ces canaux peuvent se chevaucher ou non. Le fait que des canaux se chevauchent provoque des interférences entre deux terminaux utilisant deux canaux distincts mais se chevauchant. Le signal de l'un est vu comme un signal perturbateur, ce qui peut diminuer la performance de la communication des deux terminaux, et plus généralement de l'ensemble du réseau. Par ailleurs, dans une zone de grande densité où plusieurs points d'accès Wi-Fi sont présents, les mêmes canaux peuvent être sollicités par deux réseaux locaux différents, ce qui peut entraîner une perturbation de l'un ou des deux réseaux locaux. Un tel problème peut se rencontrer notamment dans zone habitée où plusieurs passerelles domestiques ou répéteurs/extendeurs Wi-Fi ou autres points d'accès Wi-Fi de différents utilisateurs sont très proches les uns des autres.

Alternativement, le point d'accès pourrait être un routeur intelligent, un hub, un terminal mobile positionné en hotspot, etc.

Le réseau local comporte en outre un répéteur (REP). Un répéteur Wi-Fi est de manière connue un appareil se présentant sous la forme d'un boîtier qui, placé dans la zone de couverture Wi-Fi de la passerelle, diffuse le signal dans une zone mal couverte du réseau local. Le répéteur fonctionne comme une seconde passerelle avec les mêmes identifiants.

Outre la passerelle GW et le répéteur REP, le réseau LAN présenté comporte des terminaux OC1, OC2, OC3, OC4 et OC5. Dans l'exemple décrit ici, le terminal OC1 est un téléphone de type smartphone, le terminal OC2 est de type imprimante, le terminal OC3 est de type caméra, le terminal OC4 est de type enceinte connectée et le terminal OC5 est un décodeur numérique (STB). Ils sont aptes à communiquer selon les normes Wi-Fi sur le réseau local via la passerelle GW. Dans l'exemple proposé, les terminaux OC3 et OC4, éloignés de la passerelle (par exemple ils se trouvent à l'étage d'une maison alors que la passerelle est au rez-de-chaussée) sont connectés au répéteur REP, alors que les terminaux OC1, OC2 et OC5 sont connectés directement à la passerelle GW. Dans l'exemple de la Figure 1, la passerelle utilise 3 canaux de fréquence, notés C1, C2 et C3 et possédant respectivement les fréquences centrales suivantes : 5.0, 2.417 et 2.422 GHz. L'imprimante OC2 et la caméra OC3 (via le répéteur) sont connectées sur le canal 2, les terminaux OC1 et OC5 sur le canal 1 et l'enceinte connectée OC4 sur le canal 3.

Chacun des terminaux OCi du réseau local comporte au moins un identifiant MACi permettant à la passerelle de l'identifier de manière univoque dans le réseau local. Il peut notamment s'agir de son adresse MAC (pour « Media Access Control » en anglais). Selon une variante, l'identifiant du terminal peut être une adresse IP, ou un UUID (pour «Universally Unique Identifier » en anglais), par exemple dans le cas d'un protocole Bluetooth, ou une IMSI (pour International Mobile Subscriber Identity, etc. L'adresse MAC peut être modifiée par la passerelle, notamment si elle constate un dysfonctionnement de type attaque (un terminalespion ou pirate s'est approprié l'adresse du terminal du réseau local).

Dans l'exemple représenté, la passerelle GW est apte à contrôler le réseau local dans son ensemble de manière à détecter une défaillance globale provoquée par un des terminaux OCi et à y remédier. Par globale, on entend ici que le terminal défaillant perturbe au moins un autre terminal du réseau que lui-même (par exemple, la passerelle, ou un équipement voisin, ou tous les terminaux d'un segment du réseau, ou les terminaux d'un certain type, ou les terminaux situés au-delà d'une certaine distance, etc.)

Selon un exemple, l'équipement OC3 (la caméra) se trouve en bout de portée réseau et le perturbe par l'envoi répétitif de paquets de données vidéo, générant une saturation de la bande passante. Cette saturation peut affecter les communications avec le répéteur, ou les communications du réseau dans son ensemble, ou le canal C3, ou par débordement un des autres canaux, etc.

Selon d'autre exemples, l'équipement OC3 subit une attaque radio par un équipement malveillant qui transmet à sa place des paquets de données, ou dysfonctionne suite à une mauvaise mise à jour logicielle de son pilote Wi-Fi, ou gère mal le roaming entre deux bandes de fréquence Wi-Fi, etc.

La figure 2 est un logigramme représentant des étapes d'un procédé de contrôle d'un réseau Wi-Fi, conforme à l'invention, mis en oeuvre selon un mode de réalisation particulier par le système de contrôle décrit en référence à la figure 1. Selon ce mode de réalisation, c'est la passerelle GW qui prend en charge le procédé de contrôle.

Selon un autre mode de réalisation, le dispositif et le procédé peuvent être situés sur un répéteur Wi-Fi (REP).

Selon un autre mode de réalisation, le dispositif et le procédé peuvent être situés sur un terminal quelconque, par exemple le smartphone (OC1).

Selon un autre mode de réalisation, le dispositif et le procédé peuvent être répartis entre plusieurs terminaux, par exemple entre la passerelle GW et le répéteur REP.

Lors d'une étape E10, la passerelle GW s'approprie la liste des terminaux connectés au réseau. Il est bien connu qu'une passerelle domestique conserve en permanence une table des terminaux qui lui sont associés. Cette table est mise à jour à chaque réception d'un paquet d'appairage ou de connexion/déconnexion d'un terminal. Ainsi, elle dispose en mémoire de l'adresse (MAC) des terminaux qui lui sont appairés et de leur état (déconnectés, connectés, en communication, etc.)

Lors d'une étape E11, la passerelle initie une étape de surveillance du trafic IP/Wi-Fi pour détecter une perturbation « globale » du réseau local, c'est-à-dire affectant plus d'un terminal. À cet effet, elle mesure différents paramètres globaux du réseau, comme par exemple, et de manière non limitative, les paramètres suivants qui peuvent être mesurés pour un canal, ou pour un ensemble de canaux :
- la qualité ou intensité du signal ; par exemple le RSSI, de l'anglais « Received Signal Strength Indication » est une mesure du niveau de puissance d'un signal en réception (classiquement un signal radio). Son utilité est de fournir une indication sur l'intensité du signal reçu en provenance d'un terminal. Une telle intensité est généralement mesurée en dBm. Une fourchette d'intensité mesurée acceptable peut aller de 0 dBm (la meilleure) à -70 dBm (la moins bonne). L'intensité du signal peut de surcroît être évaluée par canal, par terminal, ou pour un groupe de terminaux. Par exemple le procédé mesure la qualité de toutes les trames reçues pendant un intervalle de temps. Par exemple le procédé mesure la qualité des trames reçues par le répéteur REP, ce qui donne une mesure de qualité sur le sous-réseau géré par le répéteur REP. Selon un autre exemple, la passerelle calcule le RSSI moyen de tous les terminaux qui lui sont connectés. On notera que certaines passerelles calculent déjà, de manière connue, le niveau de signal d'un terminal en faisant moyenne des RSSIs correspondant aux dernières trames reçues ;
- le nombre de retransmissions des données. On rappelle que le protocole TCP fonctionne en mode dit « connecté », ce qui signifie que 2 terminaux communicants s'assurent que leurs données sont correctement reçues. Ce protocole utilise les numéros de séquence et d'acquittements des paquets reçus. Quand un acquittement n'est pas reçu, le paquet doit être retransmis. En cas de perte de paquets, le protocole inclut donc un mécanisme de retransmission des trames perdues. De telles retransmissions de trames sont souvent dues à une surcharge du réseau. Plus il y a de paquets renvoyés et plus la latence est grande dans les communications, plus les performances sont mauvaises. Par exemple, on peut considérer qu'une valeur moyenne de retransmissions située en dessous de 10 % est acceptable ;
- le nombre de paquets perdus, ou de timeout. Après un certain nombre de tentatives de retransmission d'un paquet, la communication TCP s'arrête. C'est ce qu'on appelle le timeout. La passerelle peut enregistrer un nombre de timeout ayant entraîné un échec de communication. Par ailleurs si un autre protocole que TCP est utilisé (par exemple RTP ou UDP) des paquets peuvent être perdus sans entraîner nécessairement l'arrêt de la communication ;
- la latence est également un paramètre utile pour surveiller le bon fonctionnement du réseau local. Par latence, on entend le délai temporel nécessaire pour envoyer un paquet de données vers une destination et recevoir un acquittement en retour sur le réseau sans fil. Des valeurs élevées affectent négativement la performance d'applications en temps réel, telles que des visioconférences. Par exemple, des valeurs de latence acceptables peuvent se situer entre 1 et 10 ms. Par exemple le procédé mesure la latence de toutes les trames reçues pendant un intervalle de temps en provenance d'un terminal, d'un groupe de terminaux, d'un sous-réseau (celui du répéteur REP), etc.
- La gigue est définie pour sa part par la variation de la latence au cours du temps. La latence et la gigue peuvent être évaluées sur chaque terminal par un « ping » régulier de la passerelle vers le terminal, c'est-à-dire par l'envoi d'un paquet de test vers le terminal et par l'observation de la temporalité de la réponse ;
- le débit sur le réseau, ou charge, qui correspond au taux moyen de transferts de données menés à bien sur un segment du réseau. Il est inférieur à la bande passante effective, qui correspond au plus haut débit possible sur un segment du réseau. Le débit et la bande passante se mesurent en kilo-octets par seconde, (KB/s) ou MB/s. Plus la valeur de bande passante est théoriquement élevée, plus la performance du réseau est grande. Une utilisation très élevée de cette bande passante disponible, donc une charge très élevée, peut signifier un dysfonctionnement de l'un des terminaux. Par exemple, des valeurs de bande passante acceptables peuvent se situer au-delà de 5 MB/s ; la charge maximale acceptable peut être de 95% ;
- le chevauchement entre les canaux, qui correspond, comme expliqué auparavant, aux fréquences de chevauchement entre deux canaux adjacents.
- le recouvrement des canaux, qui résulte, comme expliqué auparavant, de la sollicitation d'un même canal par deux points d'accès différents (par exemple la passerelle du voisin, ou une deuxième passerelle dans le même domicile, ou un deuxième point d'accès dans un réseau d'entreprise). Avec la multiplication des réseaux Wi-Fi, on peut avoir un objet OC3 du LAN qui dysfonctionne sur un canal Wi-Fi car le canal est utilisé par un réseau voisin.
- le *roaming* entre points d'accès. Lorsqu'un terminal se déplace dans une zone équipée de plusieurs points d'accès (par exemple entre la passerelle GW et le répéteur REP, ou entre une passerelle voisine et la passerelle GW), il est parfois nécessaire qu'il se connecte à un nouveau point d'accès du même réseau afin de maintenir la qualité de communication. Cette capacité s'appelle le roaming. Si un terminal (OC3) du réseau dysfonctionne, il peut empêcher le *roaming* d'un autre terminal qui tenterait par exemple de se raccrocher au répéteur REP.

L'étape E11 est découpée en autant de sous-étapes E11i (avec i variable) que de paramètres. Par exemple, la latence est analysée au cours d'une étape E110, puis le RSSI au cours d'une étape E111, etc.

À l'issue de l'étape E11, le dispositif de contrôle de la passerelle dispose par exemple de la table suivante en mémoire, donnée à titre indicatif et nullement limitatif :

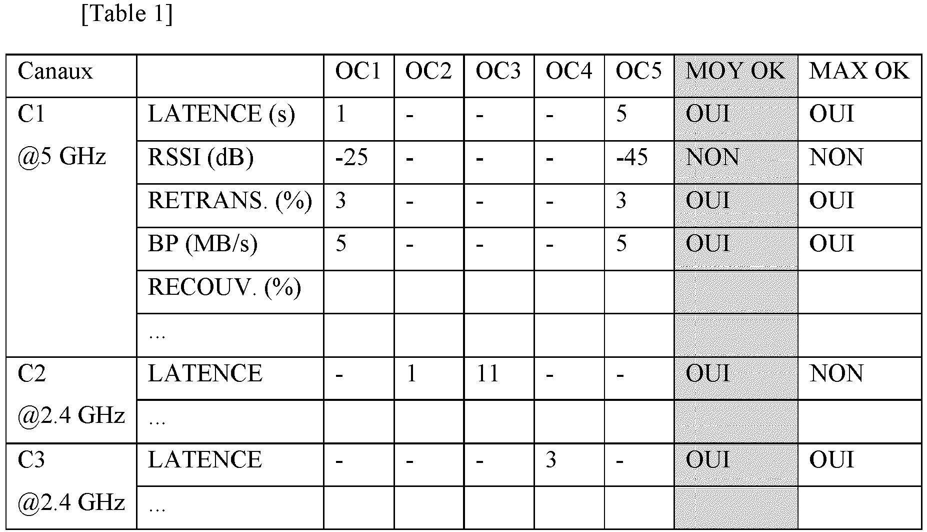

Dans cette table d'exemple, dite table d'états, les 3 canaux sont analysés séparément. Les paramètres retenus sont ici la latence (LATENCE, en secondes), le rapport signal à bruit (RSSI, en dBm), la bande passante (BP, en MB/s), le taux de retransmission (RETRANS, en pourcentage de paquets retransmis), et le recouvrement d'un canal par un autre canal (RECOUV, en pourcentage de recouvrement). D'autres paramètres pourraient être pris en compte, comme par exemple le chevauchement, la gigue, le *roaming,* etc.

Dans la table d'états représentés, la moyenne MOY OK indique si un dysfonctionnement moyen a été détecté sur le canal considéré. Par exemple, si le RSSI minimal acceptable est de -30 dbm, sur le canal C1, la qualité moyenne (de -35 dbm) n'est pas acceptable. La moyenne MAX OK indique si un dysfonctionnement a été détecté sur le canal considéré pour un terminal donné. Par exemple, si la latence maximale acceptable est de 10 secondes, sur le canal C2, la latence moyenne (de 6 secondes) est acceptable mais la latence du terminal OC3 (11 secondes) n'est pas acceptable. Ainsi selon le critère retenu, un dysfonctionnement peut être détecté ou non.

Selon un autre mode de réalisation, les canaux ne sont pas distingués lors des étapes de mesure de l'étape E11, c'est-à-dire que le procédé de contrôle effectue ses mesures sur des trames reçues et/ou émises sans tenir compte du canal concerné

Selon un autre mode de réalisation, les terminaux ne sont pas distingués, c'est-à-dire que le procédé de contrôle effectue ses mesures sur des trames reçues e/ou émises sans tenir compte du terminal concerné.

L'étape E11 s'achève selon un mode de réalisation après une durée déterminée à compter du début de la surveillance.

Selon un autre mode, l'étape E11 s'achève dès qu'une anomalie a été détectée, c'est-à-dire que l'un des paramètres a dépassé un seuil minimal (ou maximal) autorisé.

Un test peut être effectué au cours de l'étape E12 pour déterminer s'il y a un problème ou non sur le réseau local. Par exemple, les valeurs moyennes et maximales de la table 1 sont comparées aux seuils maximaux autorisés pour le paramètre considéré (par exemple 10 secondes pour la latence).

Si aucune perturbation n'est détectée à la fin de l'étape E12, le procédé s'arrête ou reboucle sur l'étape E11. L'étape E11 peut se poursuivre en tâche de fond pour mettre à jour la table de surveillance.

Si une perturbation est détectée lors de l'étape E12, selon l'exemple représenté, la passerelle a détecté une perturbation dite globale (c'est à dire qui perturbe plus d'un terminal du réseau).

Au cours d'une étape E13 facultative, en cas de perturbation globale, la passerelle recherche le terminal à l'origine de la perturbation.

Selon un mode de réalisation, le terminal perturbateur est celui dont le taux de retransmissions (respectivement le timeout, la latence, la gigue, etc.) est trop élevé, et cette valeur est déjà connue de la passerelle. Selon un exemple donné ci-dessus par la table 1, c'est le terminal OC3 dont la latence est très élevée qui perturbe le canal C2, et au-delà le réseau local. Le terminal perturbateur est ainsi identifié directement.

Selon un mode de réalisation, la passerelle réalise une analyse temporelle des données collectées et en tire une conclusion : par exemple la perturbation survient systématiquement lors de la présence du terminal OC3, qui est en limite de portée. Dans ce mode de réalisation, il n'est pas nécessaire d'effectuer de mesures précises des différents paramètres précités. Le paramètre global est relatif à la présence du terminal (sa connexion au réseau local).

Selon un mode de réalisation, la passerelle réalise une analyse supplémentaire pour détecter le ou les terminaux perturbateurs. Par exemple elle réalise un « PING » de tous les terminaux pour en déduire celui dont la latence est trop élevée, si elle ne l'a pas déjà détecté.

L'étape E13 peut être omise par la mise en oeuvre, à l'étape E14, d'une ou plusieurs contre-mesures générales, c'est à dire qui ne ciblent pas un terminal en particulier, mais visent à améliorer le fonctionnement du réseau dans son ensemble. Au nombre de ces contre-mesures générales, on peut citer, de manière non limitative :
- une notification de l'utilisateur (administrateur) de la passerelle ;
- une désactivation des fonctions Wi-Fi « avancées » qui pourraient diminuer la portée comme le Wi-Fi 6 ou 5 GHz.
- une désactivation des fonctions Wi-Fi « avancées » qui sont connues pour avoir des problèmes d'interopérabilité comme les cadres de gestion protégés (PMF). Les PMF sont une norme définie par la Wi-Fi Alliance pour améliorer la sécurité des connexions Wi-Fi.
- une augmentation de la puissance du signal émis par le point d'accès ;
- l'activation d'une antenne supplémentaire du point d'accès ;
- etc.

Au cours de l'étape E14, si un terminal perturbateur (OC3) a été détecté, la passerelle met en oeuvre une ou plusieurs contre-mesures pour tenter de corriger la perturbation, parmi lesquelles on peut citer, de manière non limitative :
- un « blocage » du terminal perturbateur : refus de connexion, mise en quarantaine, etc. Par exemple, le terminal OC3 est déconnecté pour ne pas perturber le réseau.
- la création d'un réseau Wi-Fi dédié pour le terminal perturbateur ; par exemple le terminal OC3 est assigné à un nouveau canal C4.
- l'activation d'une fonction de répéteur Wi-Fi sur un terminal à proximité du terminal perturbateur ; par exemple le terminal OC3 est assigné à un nouveau répéteur.
- une notification des terminaux perturbés (par exemple en utilisant le protocole UPnP) pour qu'ils quittent le Wi-Fi et changent de type de connexion : passage en Ethernet (par exemple la STB) ou bien dans un autre protocole radio comme Thread/ZigBee/Bluetooth.
- une modification de l'adresse (MAC, IP, etc.) du terminal perturbateur ;
etc.

L'étape E14 est découpée en autant de sous-étapes E14j que de mesures prises pour remédier au dysfonctionnement. Par exemple, une notification de l'utilisateur est effectuée au cours d'une étape E140, puis le terminal OC3 est basculé sur un autre canal au cours d'une étape E141, etc.

Puis à l'étape E15, le procédé de contrôle réévalue la situation après la mise en oeuvre de ces contre-mesures. À cet effet, il peut revenir à l'étape E11 pour analyser la table d'états dont il dispose en mémoire, qui peut être remise à jour en tâche de fond.

Selon un mode de réalisation, le paramètre global est mesuré de nouveau. En fonction de cette valeur, une nouvelle décision peut être prise selon le nouvel état du réseau.

Si la situation ne s'améliore pas, la passerelle peut prendre des contre-mesures additionnelles.

Au contraire, si la situation s'améliore, elle peut annuler les contre-mesures. Par exemple si le terminal perturbateur est déconnecté et la puissance du signal augmentée, la passerelle peut « annuler » la seconde contre-mesure en diminuant la puissance du signal. En effet, certaines contre-mesures peuvent augmenter la consommation de manière significative ou bien brider la qualité de service. Il est judicieux dans ce cas de les annuler quand le dysfonctionnement est résolu (diminuer la puissance du signal, désactiver/réactiver les fonctions Wi-Fi, désactiver les antennes Wi-Fi qui ont été activées lors de la contre-mesure, etc.).

La figure 3 représente une architecture fonctionnelle d'un dispositif de contrôle DC.

Il comprend des modules pour mesurer les paramètres de fonctionnement du réseau, détecter un dysfonctionnement, et y remédier.

Dans les modes de réalisation décrits ici, le dispositif DC a l'architecture matérielle d'un ordinateur. Son architecture matérielle comprend notamment un processeur CPU, une mémoire vive et une mémoire morte regroupées dans un module MEM, optionnellement une mémoire flash non volatile dans un mode particulier de réalisation de l'invention, ainsi que des moyens de communication TX/RX pour émettre et recevoir des messages sur le réseau Wi-Fi. De tels moyens sont connus en soi et ne sont pas décrits plus en détail ici.

La mémoire vive du dispositif permet d'enregistrer des variables utilisées pour l'exécution des étapes du procédé de contrôle selon l'invention.

La mémoire morte du dispositif constitue un support d'enregistrement conforme à l'invention, lisible par le processeur et sur lequel est enregistré un programme d'ordinateur conforme à l'invention.

Le programme d'ordinateur définit des modules fonctionnels et logiciels ici configurés pour surveiller l'état du réseau, détecter un dysfonctionnement et prendre une action de contre-mesure. Ces modules fonctionnels s'appuient sur et/ou commandent les éléments matériels du dispositif.

Le dispositif DC comprend par ailleurs dans des modes de réalisation :
- un module d'analyse ou surveillance SURV configuré pour mesurer les paramètres d'état du réseau. On notera que ce module existe déjà partiellement sur tous les points d'accès : mesure de la latence, de la bande passante, etc.
- un module ANA pour analyser les paramètres de fonctionnement et en extraire une décision de dysfonctionnement.
- un module CM de mise en place d'une contre-mesure.

## Revendications

1. Procédé de contrôle d'un réseau local administré par un point d'accès du réseau (LAN) comportant une pluralité de terminaux (OC1...OCS), le procédé comprenant des étapes de :
- obtenir (E11) au moins un paramètre d'état, dit paramètre global, comportant au moins une donnée représentative d'un fonctionnement du réseau ;
- détecter (E12) un dysfonctionnement du réseau en fonction dudit au moins un paramètre global ;
- en cas de dysfonctionnement, déclencher (E14) au moins une action de contre-mesure.

2. Procédé de contrôle selon la revendication 1, dans lequel le paramètre global comprend au moins une donnée représentative d'un fonctionnement du réseau parmi :
- une qualité de signal ;
- une latence ;
- un débit ;
- une perte de paquet de données ;
- un taux de recouvrement.

3. Procédé de contrôle selon la revendication 1, dans lequel l'identification d'un dysfonctionnement est précédée d'une comparaison d'une donnée au moins du paramètre global à un seuil.

4. Procédé de contrôle selon la revendication 1, dans lequel l'identification d'un dysfonctionnement est suivie d'une étape d'identification d'un terminal au moins responsable du dysfonctionnement, dit terminal perturbateur.

5. Procédé de contrôle selon la revendication précédente, dans lequel l'étape de déclencher une action de contre-mesure est dirigée contre ledit au moins un terminal perturbateur.

6. Procédé de contrôle selon la revendication 1, dans lequel l'étape de déclencher une action de contre-mesure dépend d'un type de dysfonctionnement détecté.

7. Procédé de contrôle selon la revendication 1, dans lequel l'étape de déclencher une action de contre-mesure dépend d'un type du terminal perturbateur détecté.

8. Procédé de contrôle selon la revendication 1, dans lequel l'étape de déclencher une action de contre-mesure est suivie des étapes de :
- obtenir (E11) une valeur mise à jour dudit paramètre global ;
- en fonction dudit au moins un paramètre global, annuler ladite action de contre-mesure.

9. Procédé de contrôle selon la revendication 1, dans lequel l'étape de contre-mesure comprend une action parmi :
- l'émission d'un message de notification ;
- une désactivation d'une fonction Wi-Fi du réseau ;
- une augmentation de la puissance du signal émis par le point d'accès;
- une augmentation de la bande passante sur au moins un canal ;
- l'activation d'une nouvelle antenne sur la passerelle de service.

10. Procédé de contrôle selon la revendication 4, dans lequel l'étape de contre-mesure comprend une action parmi :
- une déconnexion du terminal perturbateur ;
- une réaffectation de canal Wi-Fi pour le terminal perturbateur ;
- une réaffectation de point d'accès pour le terminal perturbateur ;
- une modification d'adresse du terminal perturbateur ;
- une réaffectation de canal Wi-Fi pour au moins un autre terminal que le terminal perturbateur.

11. Dispositif de contrôle d'un réseau local administré par un point d'accès du réseau (LAN) comportant une pluralité de terminaux (OC1...OCS), le dispositif étant **caractérisé en ce qu'**il est configuré (CPU, MEM) pour mettre en oeuvre :
- obtenir (E11, SURV) au moins un paramètre d'état, dit paramètre global, comportant au moins une donnée représentative d'un fonctionnement du réseau ;
- détecter (E12, ANA) un dysfonctionnement du réseau en fonction dudit au moins un paramètre global ;
- en cas de dysfonctionnement, déclencher (E14, CM) au moins une action de contre-mesure.

12. Passerelle de réseau comportant un dispositif selon la revendication précédente.

13. Programme d'ordinateur comportant des instructions pour l'exécution des étapes d'un procédé de contrôle selon la revendication 1 lorsque ledit programme est exécuté par un ordinateur.
